# EUROPEAN PATENT SPECIFICATION

(11) **EP 3 009 252 B1**
(45) Date of publication and mention of the grant of the patent: **03.05.2017**
(21) Application number: 15185580.6
(22) Date of filing: 17.09.2015
(51) Int. Cl.: B29C 49/42, B29C 49/06

(54) **FLUID PRESSURE CIRCUIT AND BLOW MOLDING SYSTEM**
FLUIDDRUCKKREISLAUF UND BLASFORMSYSTEM
CIRCUIT DE PRESSION DE FLUIDE ET SYSTÈME DE MOULAGE PAR SOUFFLAGE

(30) Priority: 15.10.2014 JP 2014210380
(43) Date of publication of application: 20.04.2016
(73) Proprietor: SMC Corporation, Tokyo 101-0021 (JP)
(72) Inventor: YOSHIDA, Masami, Ibaraki-ken, 300-2493 (JP); ONO, Masaaki, Ibaraki-ken, 300-2493 (JP); MORI, Hirohumi, Ibaraki-ken, 300-2493 (JP)
(74) Representative: Keil & Schaafhausen Patent- und Rechtsanwälte PartGmbB

(56) References cited:
- DE-A1-102005 020 716
- DE-A1-102010 011 244
- DE-U1-202009 006 684
- JP-A- H11 207 808
- US-A1- 2013 270 751

## Description

### BACKGROUND OF THE INVENTION

### Field of the Invention:

The present invention relates to a fluid pressure circuit and a blow molding system equipped with a first fluid drive valve that opens and closes a supply flow passage through which a fluid from a fluid supply unit is guided to a fluid receiving unit that is supplied with the fluid, and a second fluid drive valve that opens and closes a discharge flow passage through which a fluid from the fluid receiving unit is guided to a fluid discharge unit. Description of the Related Art:
Conventionally, a blow molding system for molding a resin container such as a PET bottle using high pressure air that is directed through a pneumatic circuit from an air tank has widely been utilized. For example, in Japanese Laid-Open Patent Publication No. 11-207808, in relation to an air pressure circuit of this type, a technical concept is disclosed for individually controlling a number of valves, such as a low-pressure valve, a switching valve, a high pressure valve, and an exhaust valve, etc.

### SUMMARY OF THE INVENTION

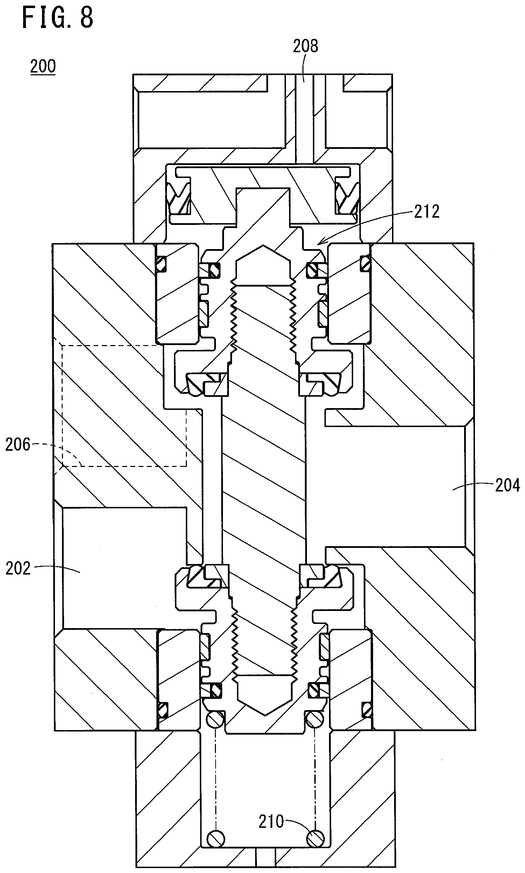

However, with the air pressure circuit (fluid pressure circuit) according to Japanese Laid-Open Patent Publication No. 11-207808, individualized control of the large number of valves is complex. In the fluid pressure circuit, it is considered to simplify the control, for example, by using an external pilot type 3-port valve 200, as shown in FIG. 8. More specifically, as shown in FIG. 8, the 3-port valve 200 includes a supply port 202, an output port 204, and a discharge port 206, for example.

With the 3-port valve 200, in a state in which a pilot fluid is not being supplied to a pilot port 208, a valve body 212 closes the supply port 202 under the action of a return spring 210, whereupon the output port 204 and the discharge port 206 are placed in communication. On the other hand, by the pilot fluid being supplied to the pilot port 208 in order to drive the valve body 212, the discharge port 206 is closed, and the supply port 202 and the output port 204 are placed in communication.

However, with a 3-port valve 200 of this type, when switching between flow passages, since an opening operation of the supply port 202 and a closing operation of the discharge port 206 are carried out simultaneously in the valve body 212, the supply port 202 and the discharge port 206 are temporarily placed in communication with each other. As a result, there is a problem in that the fluid that is led from the supply port 202 leaks out to the exterior (blowing out of the fluid occurs) through the discharge port 206. In particular, with the fluid pressure circuit, which is applied to a blow molding system or the like, since high pressure air is used as the fluid and the switching operation is performed frequently, consumption of the air increases.

The present invention has been devised taking into consideration the aforementioned problems, and has the object of providing a fluid pressure circuit and a blow molding system, which are capable of reducing consumption of fluid together with simplifying control.

A fluid pressure circuit according to the present invention includes a supply flow passage that guides a fluid from a fluid supply unit to a fluid receiving unit that is supplied with the fluid, a first fluid drive valve that opens and closes the supply flow passage, a discharge flow passage that guides fluid from the fluid receiving unit to a fluid discharge unit, a second fluid drive valve that opens and closes the discharge flow passage, a first pilot flow passage that guides a pilot fluid to the first fluid drive valve, a first solenoid valve disposed in the first pilot flow passage, a second pilot flow passage that guides the pilot fluid to the second fluid drive valve, a second solenoid valve disposed in the second pilot flow passage, and delay means for delaying a start time of a valve-opening operation of the first fluid drive valve until after a start time of a valve-closing operation of the second fluid drive valve, when one control signal from a controller is output with respect to the first solenoid valve and the second solenoid valve.

According to such a configuration, when the one control signal from the controller is output with respect to the first solenoid valve and the second solenoid valve, as a result of the delay means, the valve-opening operation of the first fluid drive valve under the action of the first solenoid valve is started after the valve-closing operation of the second fluid drive valve under the action of the second solenoid valve has started. Consequently, since the time for which the fluid supply unit and the fluid discharge unit communicate with each other is comparatively short, leaking out of fluid from the fluid supply unit to the fluid discharge unit can be minimized. Thus, consumption of the fluid can be suppressed. Further, since opening and closing of the first fluid drive valve and the second fluid drive valve is accomplished using one control signal, the control can be simplified.

In the fluid pressure circuit, the delay means may start the valve-opening operation of the first fluid drive valve after completion of the valve-closing operation of the second fluid drive valve. According to this arrangement, since leaking out of the fluid to the fluid discharge unit from the fluid supply unit can be minimized further, consumption of the fluid can further be suppressed.

In the fluid pressure circuit, the delay means may include a delay circuit disposed in the first solenoid valve. According to such an arrangement, even in the case that the one control signal is output with respect to the first solenoid valve and the second solenoid valve, the driving start time of the first solenoid valve can be delayed until after the driving start time of the second solenoid valve. Consequently, with a simple configuration, the start time of the valve-opening operation of the first fluid drive valve can be delayed beyond the start time of the valve-closing operation of the second fluid drive valve.

In the above-described fluid pressure circuit, when the control signal is input, the first solenoid valve may be driven to supply the pilot fluid to the first fluid drive valve, and when input of the control signal is stopped, the first solenoid valve may be driven to stop supply of the pilot fluid to the first fluid drive valve. Further, the valve-opening operation of the first fluid drive valve may be started when the pilot fluid, which is led from the first solenoid valve, has reached a predetermined drive pressure, and the delay means may include a tank that is disposed between the first solenoid valve in the first pilot flow passage and the first fluid drive valve.

According to this configuration, when the control signal is input to the first solenoid valve, the first solenoid valve is driven, whereupon the pilot fluid passes through the tank and then is supplied to the first fluid drive valve. Owing to this feature, compared to a configuration in which the tank is not provided, the time until the pressure of the pilot fluid that is supplied to the first fluid drive valve reaches the predetermined drive pressure (i.e., the pressure needed to start the valve-opening operation of the first fluid drive valve) can be delayed. Thus, with a simple configuration, the start time of the valve-opening operation of the first fluid drive valve can be delayed beyond the start time of the valve-closing operation of the second fluid drive valve.

In the above-described fluid pressure circuit, the first solenoid valve may include a pilot fluid supply port to which the pilot fluid from the pilot fluid supply unit is introduced, a pilot fluid output port that outputs the pilot fluid to the first fluid drive valve, and a pilot fluid discharge port through which the pilot fluid is led out to the pilot fluid discharge unit. Further, when the control signal is input, the pilot fluid discharge port may be closed, whereupon the pilot fluid supply port and the pilot fluid output port are placed in communication. Moreover, when the input of the control signal is stopped, the pilot fluid supply port may be closed, whereupon the pilot fluid output port and the pilot fluid discharge port are placed in communication.

According to such an arrangement, since the pilot fluid supply port is closed and the pilot fluid output port and the pilot fluid discharge port are placed in communication in the event that the input of the control signal to the first solenoid valve is stopped, the pilot fluid in the interior of the tank can easily and reliably be discharged.

A blow molding system according to the present invention, which performs blow molding by supplying a fluid from a fluid supply unit to a fluid receiving unit that is supplied with the fluid, includes the fluid supply unit and the fluid receiving unit, a fluid pressure circuit that supplies the fluid from the fluid supply unit to the fluid receiving unit, a fluid discharge unit to which fluid guided from the fluid receiving unit and through the fluid pressure circuit is discharged, and a controller that controls the fluid pressure circuit. In this case, the fluid pressure circuit comprises the aforementioned fluid pressure circuit referred to above.

According to such a configuration, a blow molding system, which realizes the same advantages and effects as those of the aforementioned fluid pressure circuit, can be obtained.

According to the fluid pressure circuit and the blow molding system of the present invention, when the one control signal from the controller is output with respect to the first solenoid valve and the second solenoid valve, since the start time of the valve-opening operation of the first fluid drive valve is delayed until after the start time of the valve-closing operation of the second fluid drive valve, consumption of fluid can be suppressed and the control can be simplified.

The above and other objects, features and advantages of the present invention will become more apparent from the following description when taken in conjunction with the accompanying drawings in which a preferred embodiment of the present invention is shown by way of illustrative example.

### BRIEF DESCRIPTION OF THE DRAWINGS

FIG. 1 is a circuit diagram of a blow molding system equipped with a fluid pressure circuit according to a first embodiment of the present invention;
FIG. 2 is a longitudinal sectional view of a main body of the fluid pressure circuit shown in FIG. 1;
FIG. 3 is a timing chart for describing operations of the fluid pressure circuit shown in FIG. 1;
FIG. 4 is a timing chart according to a modification of the first embodiment;
FIG. 5 is a circuit diagram of a blow molding system equipped with a fluid pressure circuit according to a second embodiment of the present invention;
FIG. 6 is a timing chart for describing operations of the fluid pressure circuit shown in FIG. 5;
FIG. 7 is a timing chart according to a modification of the second embodiment; and
FIG. 8 is a longitudinal cross sectional view of an external pilot type 3-port valve that is used in a blow molding system according to a conventional technique.

### DESCRIPTION OF THE PREFERRED EMBODIMENTS

Preferred embodiments of a fluid pressure circuit and a blow molding system according to the present invention will be described below with reference to the accompanying drawings. In the embodiment below, an example is described in which the fluid pressure circuit is applied to a blow molding system. However, the fluid pressure circuit can be applied with respect to various types of systems and devices, such as a fluid pressure cylinder system that supplies fluid to a cylinder for driving the cylinder.

### (First Embodiment)

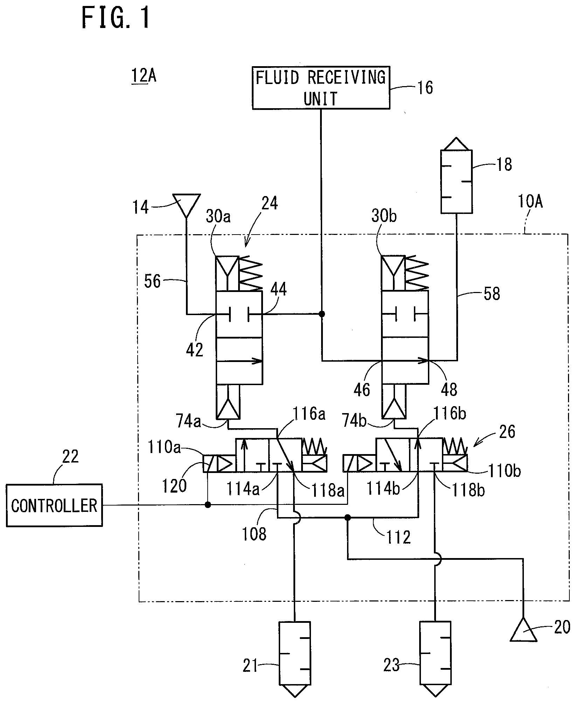

A blow molding system 12A, which is equipped with a fluid pressure circuit 10A according to a first embodiment, is used, for example, for molding a resin container such as a PET bottle or the like. The blow molding system 12A includes a fluid supply unit 14 that serves as a fluid supply source, a fluid receiving unit 16 (output device) that is supplied with the fluid, a fluid discharge unit 18 that discharges to atmosphere the fluid from the fluid receiving unit 16, a pilot fluid supply unit 20 that serves as a supply source for a pilot fluid, a plurality of (two as shown in FIG. 1) pilot fluid discharge units 21, 23 that discharge the pilot fluid to atmosphere, a fluid pressure circuit 10A, and a controller 22.

The fluid supply unit 14 and the pilot fluid supply unit 20 are configured to include a compressor or a pump, for example. Although pressurized air preferably is used as the fluid that is supplied from the fluid supply unit 14, any arbitrary gas or liquid may be used. The same may be said for the pilot fluid.

The fluid receiving unit 16 is constituted as a workpiece mounting device on which a workpiece is mounted prior to performing blow molding. The fluid discharge unit 18 and the respective pilot fluid discharge units 21, 23 contain silencers therein for reducing exhaust sounds of the fluids. However, the fluid discharge unit 18 and the respective pilot fluid discharge units 21, 23 need not necessarily contain silencers.

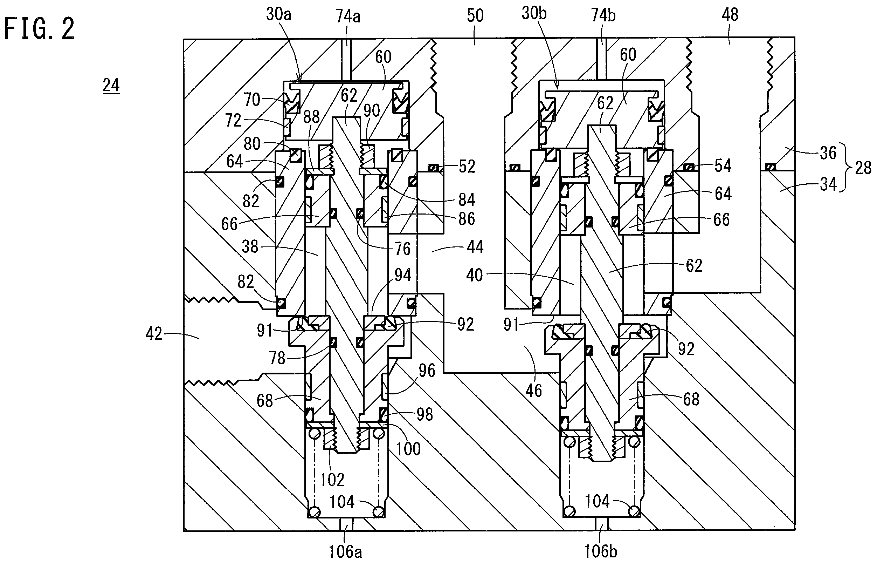

The fluid pressure circuit 10A has a fluid pressure circuit main body 24, and a pilot valve mechanism 26 that supplies the pilot fluid to the fluid pressure circuit main body 24. As shown in FIG. 2, the fluid pressure circuit main body 24 includes a valve body 28, and a first fluid drive valve 30a and a second fluid drive valve 30b, which are juxtaposed in parallel in the valve body 28.

The valve body 28 is equipped with a base member 34 and a cover member 36. A first valve chamber 38 in which the first fluid drive valve 30a is arranged, and a second valve chamber 40 in which the second fluid drive valve 30b is arranged are formed by the base member 34 and the cover member 36.

A supply port 42 and a first output port 44, which communicate with the first valve chamber 38, and a second output port 46 and a discharge port 48, which communicate with the second valve chamber 40, are formed in the base member 34. One end of a fluid passage that connects to the fluid supply unit 14 is connected to the supply port 42.

The first output port 44 and the second output port 46 communicate with a common output port 50 that is formed between the first fluid drive valve 30a and the second fluid drive valve 30b. The common output port 50 is formed in communication with a connecting hole disposed in the base member 34, and with a through hole disposed in the cover member 36. One end of a fluid passage that connects to the fluid receiving unit 16 is connected to the common output port 50.

The discharge port 48 is formed in communication with a connecting hole disposed in the base member 34 and with a through hole disposed in the cover member 36. An end of a fluid passage that connects to the fluid discharge unit 18 is connected to the discharge port 48. A sealing ring 52 that prevents leakage of fluid to the exterior of the valve body 28 from the common output port 50, and a sealing ring 54 that prevents leakage of fluid to the exterior of the valve body 28 from the discharge port 48 are provided between the base member 34 and the cover member 36.

The first fluid drive valve 30a opens and closes a supply flow passage 56 through which a fluid from the fluid supply unit 14 is guided to the fluid receiving unit 16, and the second fluid drive valve 30b opens and closes a discharge flow passage 58 through which a fluid from the fluid receiving unit 16 is guided to a fluid discharge unit 18 (see FIG. 1). The first fluid drive valve 30a and the second fluid drive valve 30b are constituted as so-called external pilot type 2-port valves.

The first fluid drive valve 30a includes a pilot piston 60 disposed in the cover member 36, a piston rod 62 that is connected to the pilot piston 60, a bush 64 that is fixed in the first valve chamber 38 and through which the piston rod 62 is inserted, and an adapter 66 and a piston 68 that are disposed on the piston rod 62.

A piston packing 70 and a wear ring 72 are mounted through annular grooves on an outer circumferential surface of the pilot piston 60. Further, within a wall surface that makes up the first valve chamber 38, on a region thereof facing an end surface of the pilot piston 60, a pilot port 74a is formed through which the pilot fluid flows.

Both ends of the piston rod 62 are reduced in diameter. The adapter 66 is disposed through a rod packing 76 on a reduced diameter portion on one end side of the piston rod 62, and the piston 68 is disposed through a rod packing 78 on a reduced diameter portion on the other end side of the piston rod 62.

The bush 64 is formed in a cylindrical shape and extends in an axial direction of the piston rod 62 from the cover member 36 to the vicinity of the supply port 42. A through hole that communicates with the first output port 44 is formed in the bush 64. In the bush 64, on an end surface thereof on the side of the pilot piston 60, a ring-shaped damper (resilient member) 80 is installed that mitigates shocks caused by collision with the pilot piston 60. A pair of sealing rings 82 is mounted on the outer circumferential surface of the bush 64.

A sealing ring 84 and a wear ring 86 are mounted through annular grooves on an outer circumferential surface of the adapter 66. In the present embodiment, inadvertent removal of the sealing ring 84 is prevented by providing a retaining ring 88 on one end surface of the adapter 66. Further, in a state in which the other end surface of the adapter 66 abuts against a stepped part of the piston rod 62, a nut 90 is screw-engaged with a threaded part formed on one end portion of the piston rod 62, and the retaining ring 88 is press-fitted onto another end side of the piston rod 62, whereby the adapter 66 is fixed with respect to the piston rod 62.

One end portion of the piston 68 is formed to be larger than the inner diameter of the bush 64, and a buffer ring (resilient member) 92, which functions as a valve body in contact with a valve seat 91 that is formed on the bush 64, and a retaining member 94 for fixing the buffer ring 92 are arranged in a concave portion that is formed on one end surface of the piston 68.

A wear ring 96 and a sealing ring 98 are mounted through annular grooves on an outer circumferential surface of the diametrically reduced other end side of the piston 68. In the present embodiment, inadvertent removal of the sealing ring 98 is prevented by providing a retaining ring 100 on the other end surface of the piston 68. Further, in a state in which the retaining member 94 abuts against a stepped part of the piston rod 62, a nut 102 is screw-engaged with a threaded part formed on the other end portion of the piston rod 62, and the retaining ring 100 is press-fitted onto the one end side of the piston rod 62, whereby the piston 68 is fixed with respect to the piston rod 62.

A return spring 104, which urges the piston 68 toward the side of the pilot piston 60, is disposed on the retaining ring 100. Further, within the first valve chamber 38, on a wall surface that makes up a space in which the return spring 104 is arranged, a breathing port 106a is formed that communicates with the atmosphere.

In the first fluid drive valve 30a, which is constituted as described above, under a condition in which the pilot fluid is not being supplied, the buffer ring 92 is kept in contact with the valve seat 91 by the biasing force of the return spring 104, thereby maintaining a valve-closed state. On the other hand, when the pilot fluid is supplied through the pilot port 74a, the piston rod 62 is displaced toward the side of the return spring 104 in opposition to the spring force of the return spring 104, whereby a valve-open state is brought about in which the buffer ring 92 separates away from the valve seat 91.

Since the second fluid drive valve 30b is of the same structure as the first fluid drive valve 30a, detailed description of the second fluid drive valve 30b is omitted. In the second fluid drive valve 30b, the bush 64 extends in an axial direction of the piston rod 62 from the cover member 36 to the vicinity of the second output port 46. A through hole that communicates with the discharge port 48 is formed in the bush 64 of the second fluid drive valve 30b.

Further, within a wall surface that makes up the second valve chamber 40, on a region thereof facing an end surface of the pilot piston 60, a pilot port 74b is formed through which the pilot fluid flows. In addition, in the second valve chamber 40, on a wall surface that makes up a space in which the return spring 104 is arranged, a breathing port 106b is formed that communicates with the atmosphere.

As shown in FIG. 1, the pilot valve mechanism 26 is equipped with a first pilot flow passage 108 for guiding the pilot fluid from the pilot fluid supply unit 20 to the first fluid drive valve 30a, a first solenoid valve 110a provided in the first pilot flow passage 108, a second pilot flow passage 112 for guiding the pilot fluid from the pilot fluid supply unit 20 to the second fluid drive valve 30b, and a second solenoid valve 110b provided in the second pilot flow passage 112.

The first solenoid valve 110a is constituted as a so-called 3-port solenoid valve, and includes a pilot fluid supply port 114a to which the pilot fluid from the pilot fluid supply unit 20 is introduced, a pilot fluid output port 116a that outputs the pilot fluid to the first fluid drive valve 30a, and a pilot fluid discharge port 118a through which the pilot fluid is led out to the pilot fluid discharge unit 21.

The first solenoid valve 110a is constituted as a normally closed valve. In the case that the control signal is not input to the first solenoid valve 110a from the controller 22, the pilot fluid supply port 114a is closed, and the pilot fluid discharge port 118a and the pilot fluid output port 116a are placed in communication. Consequently, the first fluid drive valve 30a remains in a valve-closed state under the action of the return spring 104.

Further, in the first solenoid valve 110a, when the control signal is input from the controller 22, the pilot fluid discharge port 118a is closed, whereupon the pilot fluid supply port 114a and the pilot fluid output port 116a are placed in communication. Consequently, the first fluid drive valve 30a is placed in a valve-open state under the action of the pilot fluid.

The second solenoid valve 110b is constituted as a so-called 3-port solenoid valve, and includes a pilot fluid supply port 114b to which the pilot fluid from the pilot fluid supply unit 20 is introduced, a pilot fluid output port 116b that outputs the pilot fluid to the second fluid drive valve 30b, and a pilot fluid discharge port 118b through which the pilot fluid is led out to the pilot fluid discharge unit 23.

The second solenoid valve 110b is constituted as a normally open valve. In the case that a control signal is not input to the second solenoid valve 110b from the controller 22, the pilot fluid discharge port 118b is closed, and the pilot fluid supply port 114b and the pilot fluid output port 116b are placed in communication. Consequently, the second fluid drive valve 30b is placed in a valve-open state under the action of the pilot fluid.

Further, in the second solenoid valve 110b, when the control signal is input from the controller 22, the pilot fluid supply port 114b is closed, whereupon the pilot fluid discharge port 118b and the pilot fluid output port 116b are placed in communication. Consequently, the second fluid drive valve 30b remains in a valve-closed state under the action of the return spring 104.

The controller 22 controls opening and closing of both the first fluid drive valve 30a and the second fluid drive valve 30b, by outputting one control signal with respect to the first solenoid valve 110a and the second solenoid valve 110b.

In the present embodiment, a delay circuit (delay means) 120 is incorporated into a substrate of the first solenoid valve 110a. When a control signal is input to the first solenoid valve 110a from the controller 22, the delay circuit 120 delays by a predetermined delay time ΔT the timing at which driving (activation or energization of the solenoid unit) of the first solenoid valve 110a is started. Consequently, the valve-opening operation of the first fluid drive valve 30a can be started after the valve-closing operation of the second fluid drive valve 30b has started.

In the present embodiment, the delay time ΔT is set to a time such that the valve-opening operation of the first fluid drive valve 30a is started after completion of the valve-closing operation of the second fluid drive valve 30b. Owing thereto, leakage of the fluid of the fluid supply unit 14 from the fluid discharge unit 18 through the first fluid drive valve 30a and the second fluid drive valve 30b can reliably be prevented.

In this case, more preferably, the delay time ΔT is set to a time such that the valve-opening operation of the first fluid drive valve 30a is started substantially at the same time as the completion of the valve-closing operation (i.e., immediately after completion of the valve-closing operation) of the second fluid drive valve 30b. Thus, leakage of the fluid of the fluid supply unit 14 from the fluid discharge unit 18 through the first fluid drive valve 30a and the second fluid drive valve 30b can reliably be prevented, while also effectively suppressing a lengthening of the time needed for the flow passage switching operations of the fluid pressure circuit 10A.

The blow molding system 12A, which is equipped with the fluid pressure circuit 10A according to the present embodiment, is constructed basically as described above. Next, operations and advantages thereof will be explained.

First, in an initial state prior to performing blow molding, the controller 22 stops output of the control signal with respect to the first solenoid valve 110a and the second solenoid valve 110b. At this time, in the first solenoid valve 110a, the pilot fluid supply port 114a is closed, and the pilot fluid discharge port 118a and the pilot fluid output port 116a are placed in communication. Thus, since the pilot fluid is not supplied to the first fluid drive valve 30a, communication between the supply port 42 and the first output port 44 is blocked. In other words, supply of the fluid to the fluid receiving unit 16 from the fluid supply unit 14 is stopped.

Further, in the second solenoid valve 110b, the pilot fluid discharge port 118b is closed, and the pilot fluid supply port 114b and the pilot fluid output port 116b are placed in communication. Thus, since the pilot fluid is supplied to the second fluid drive valve 30b, communication is established between the second output port 46 and the discharge port 48.

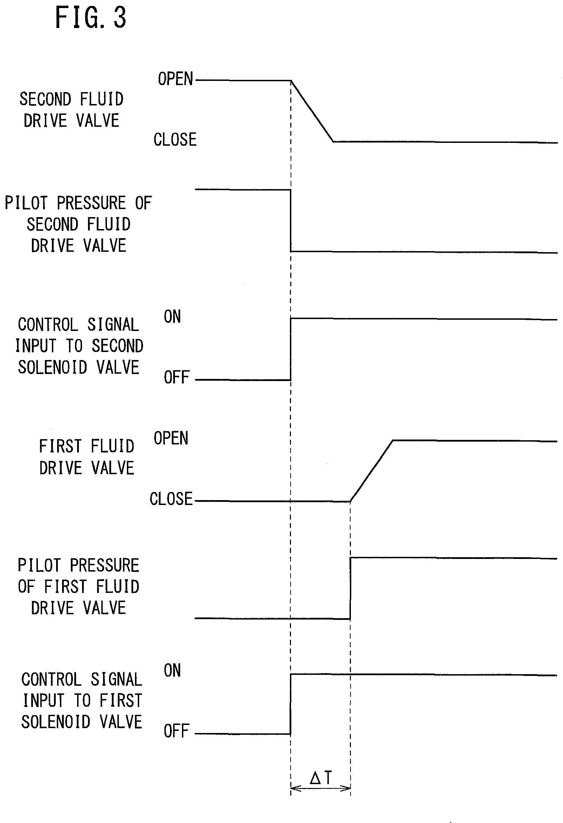

In the case that blow molding is carried out, a non-illustrated workpiece (parison) is arranged in a predetermined mold, and the fluid receiving unit 16 is attached to the workpiece. In addition, one control signal is output from the controller 22 with respect to the first solenoid valve 110a and the second solenoid valve 110b. When this is done, as shown in FIG. 3, the control signal is input substantially simultaneously to the first solenoid valve 110a and the second solenoid valve 110b.

When the control signal is input to the second solenoid valve 110b, the pilot fluid supply port 114b is closed, and the pilot fluid output port 116b and the pilot fluid discharge port 118b are placed in communication. Upon doing so, since the pilot fluid that was supplied to the second fluid drive valve 30b is discharged to atmosphere through the pilot fluid discharge unit 23, a valve-closing operation of the second fluid drive valve 30b is started. More specifically, in the second fluid drive valve 30b, the piston 68, which is pressed by the return spring 104, is displaced toward the valve seat 91. In addition, in the second fluid drive valve 30b, by the buffer ring 92 abutting against the valve seat 91, thereby completing the valve-closing operation of the second fluid drive valve 30b, communication between the second output port 46 and the discharge port 48 is blocked.

On the other hand, when the control signal is input to the first solenoid valve 110a, after the predetermined delay time ΔT set by the delay circuit 120 has elapsed, the first solenoid valve 110a is driven. More specifically, after the valve-closing operation of the second fluid drive valve 30b is completed, the first solenoid valve 110a is driven, the pilot fluid discharge unit 21 is closed, and the pilot fluid supply port 114a and the pilot fluid output port 116a are placed in communication.

When this occurs, since the pilot fluid from the pilot fluid supply unit 20 is guided to the first fluid drive valve 30a, the valve-opening operation of the first fluid drive valve 30a is started. More specifically, in the first fluid drive valve 30a, the pilot piston 60 is pressed by the pilot fluid, whereby the buffer ring 92 separates away from the valve seat 91. Stated otherwise, the supply port 42 and the first output port 44 are placed in communication, and the supply flow passage 56 is opened. In addition, upon completion of the valve-opening operation of the first fluid drive valve 30a, the fluid that is supplied to the fluid receiving unit 16 reaches a predetermined pressure.

Consequently, the fluid from the fluid supply unit 14 is guided to the fluid receiving unit 16 through the supply port 42, the first output port 44, and the common output port 50, and the workpiece is subjected to blow molding. At this time, since the discharge flow passage 58 is closed, the fluid supplied to the common output port 50 from the first output port 44 is not discharged to the atmosphere.

After completion of blow molding, the controller 22 stops output of the control signal with respect to the first solenoid valve 110a and the second solenoid valve 110b. Consequently, the first solenoid valve 110a and the second solenoid valve 110b are driven, and by the second fluid drive valve 30b being opened under the action of the pilot fluid, together with the pilot fluid being discharged to atmosphere through the pilot fluid discharge unit 21, the first fluid drive valve 30a is closed under the action of the return spring 104, and the initial condition is restored.

According to the present embodiment, when the one control signal from the controller 22 is output with respect to the first solenoid valve 110a and the second solenoid valve 110b, as a result of the delay circuit 120, the valve-opening operation of the first fluid drive valve 30a under the action of the first solenoid valve 110a is started after completion of the valve-closing operation of the second fluid drive valve 30b under the action of the second solenoid valve 110b (after the valve-closing operation of the second fluid drive valve 30b has started). Accordingly, since leaking out of fluid to the fluid discharge unit 18 from the fluid supply unit 14 can be minimized, consumption of fluid when blow molding is carried out can be effectively suppressed. Further, since opening and closing of the first fluid drive valve 30a and the second fluid drive valve 30b is accomplished by driving the first solenoid valve 110a and the second solenoid valve 110b using one control signal, the control can be simplified.

According to the present embodiment, since the delay circuit 120 is incorporated into the substrate of the first solenoid valve 110a, even in the case that the one control signal is output with respect to the first solenoid valve 110a and the second solenoid valve 110b, the driving start time of the first solenoid valve 110a can be delayed until after the driving start time of the second solenoid valve 110b. Consequently, with a simple configuration, the start time of the valve-opening operation of the first fluid drive valve 30a can be delayed beyond the start time of the valve-closing operation of the second fluid drive valve 30b.

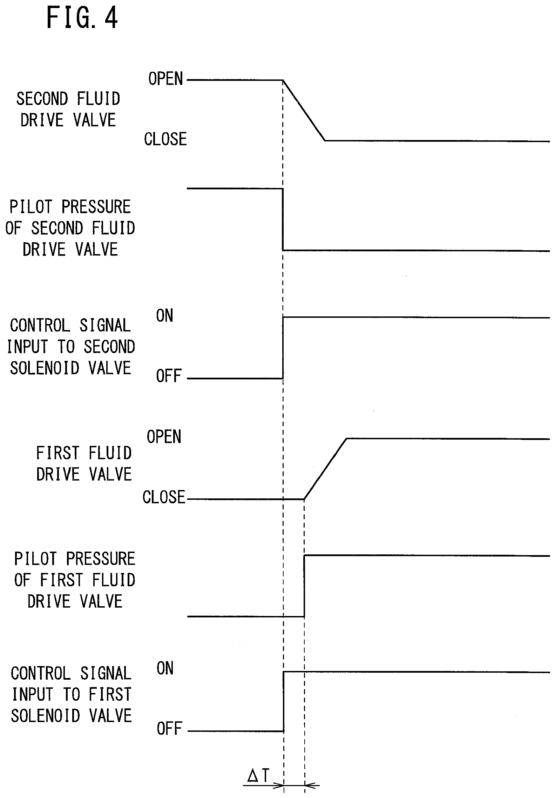

The present embodiment is not limited to the configuration and controls discussed above. The delay time ΔT may be set to a time such that the start of the valve-opening operation of the first fluid drive valve 30a occurs during a time between the start and the completion of the valve-closing operation of the second fluid drive valve 30b. In this case, when the one control signal from the controller 22 is output with respect to the first solenoid valve 110a and the second solenoid valve 110b, as shown in FIG. 4, as a result of the delay circuit 120, the valve-opening operation of the first fluid drive valve 30a under the action of the first solenoid valve 110a is started during a time between the start and the completion of the valve-closing operation of the second fluid drive valve 30b under the action of the second solenoid valve 110b (after the valve-closing operation of the second fluid drive valve 30b has started).

Consequently, since the time for which the fluid supply unit 14 and the fluid discharge unit 18 communicate with each other is comparatively short, leaking out of fluid from the fluid supply unit 14 to the fluid discharge unit 18 can be minimized. Thus, the control can be simplified, and consumption of fluid can be suppressed. Further, lengthening of the time needed for the flow passage switching operations of the fluid pressure circuit 10A can be further suppressed.

### (Second Embodiment)

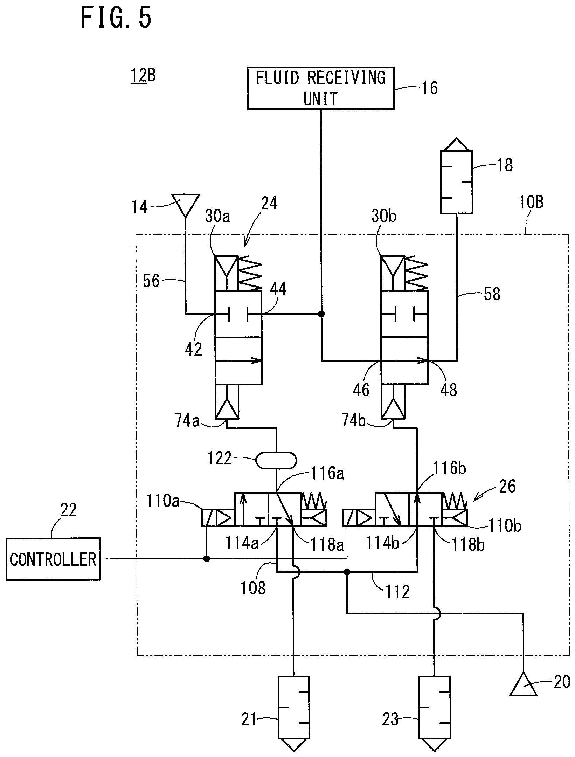

Next, a blow molding system 12B equipped with a fluid pressure circuit 10B according to a second embodiment of the present invention will be described with reference to FIGS. 5 through 7. In the blow molding system 12B according to the present embodiment, structural elements thereof, which have the same or similar functions and realize the same effects as those of the blow molding system 12A described above, are denoted by the same reference characters, and detailed description of such features is omitted.

As shown in FIG. 5, the fluid pressure circuit 10B according to the present embodiment includes a tank 122, which functions as the delay means, and which is disposed between the pilot fluid output port 116a of the first solenoid valve 110a in the first pilot flow passage 108 and the pilot port 74a of the first fluid drive valve 30a.

Owing to this feature, since the pilot fluid of the pilot fluid supply unit 20 passes through the tank 122 and then is guided to the pilot port 74a of the first fluid drive valve 30a, the time until the pressure (pilot pressure) of the pilot fluid reaches a pressure (drive pressure) necessary to displace the pilot piston 60 of the first fluid drive valve 30a can be delayed. Consequently, the valve-opening operation of the first fluid drive valve 30a can be started after the valve-closing operation of the second fluid drive valve 30b has started.

The capacity or volume of the tank 122 is set to a volume such that the valve-opening operation of the first fluid drive valve 30a is started after completion of the valve-closing operation of the second fluid drive valve 30b. Accordingly, leakage of the fluid of the fluid supply unit 14 from the fluid discharge unit 18 through the first fluid drive valve 30a and the second fluid drive valve 30b can reliably be prevented.

In this case, preferably, the capacity or volume of the tank 122 is set to a volume such that the valve-opening operation of the first fluid drive valve 30a is started substantially at the same time as the completion of the valve-closing operation (i.e., immediately after completion of the valve-closing operation) of the second fluid drive valve 30b. This is so that leakage of the fluid of the fluid supply unit 14 from the fluid discharge unit 18 through the first fluid drive valve 30a and the second fluid drive valve 30b can reliably be prevented, while also effectively suppressing a lengthening of the time needed for the flow passage switching operations of the fluid pressure circuit 10B.

With the present embodiment, the aforementioned delay circuit 120 is not provided. However, in the present embodiment, it is possible for the delay circuit 120 to be provided in the first solenoid valve 110a. In this case, the valve-opening operation of the first fluid drive valve 30a can be delayed using both the delay circuit 120 and the tank 122.

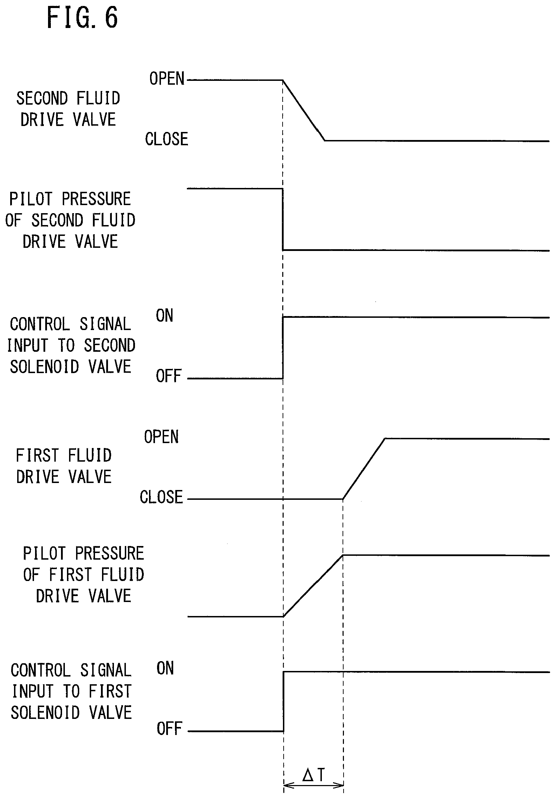

According to the present embodiment, as shown in FIG. 6, when blow molding is carried out, upon the controller 22 outputting one control signal with respect to the first solenoid valve 110a and the second solenoid valve 110b, the first solenoid valve 110a and the second solenoid valve 110b are driven substantially at the same time. More specifically, under the action of the second solenoid valve 110b, the valve-closing operation of the second fluid drive valve 30b is started. In addition, by completing the valve-closing operation of the second fluid drive valve 30b, communication between the second output port 46 and the discharge port 48 is blocked.

Further, in the first solenoid valve 110a, the pilot fluid discharge port 118a is closed, and the pilot fluid supply port 114a and the pilot fluid output port 116a are placed in communication. Upon doing so, the pilot fluid from the pilot fluid supply unit 20 passes through the tank 122, and then is supplied to the pilot port 74a of the first fluid drive valve 30a. At this time, the pilot pressure that acts on the first fluid drive valve 30a reaches the drive pressure of the first fluid drive valve 30a when the predetermined delay time ΔT has elapsed.

More specifically, during the period that the pilot pressure of the first fluid drive valve 30a is rising, the valve-closing operation of the second fluid drive valve 30b is completed. In addition, when the pilot pressure reaches the drive pressure, the pilot piston 60 of the first fluid drive valve 30a is pressed by the pilot fluid, whereby the buffer ring 92 separates away from the valve body. Consequently, the supply port 42 and the first output port 44 are placed in communication, and the supply flow passage 56 is opened. In addition, upon completion of the valve-opening operation of the first fluid drive valve 30a, the fluid that is supplied to the fluid receiving unit 16 reaches a predetermined pressure, whereby blow molding is carried out.

After completion of blow molding, when the controller 22 stops output of the control signal with respect to the first solenoid valve 110a and the second solenoid valve 110b, the first solenoid valve 110a and the second solenoid valve 110b are driven, and the second fluid drive valve 30b is opened, together with closing the first fluid drive valve 30a. At this time, in the first solenoid valve 110a, the pilot fluid supply port 114a is closed, and the pilot fluid discharge port 118a and the pilot fluid output port 116a are placed in communication. Thus, the pilot fluid that resides in the tank 122 is discharged to atmosphere through the pilot fluid discharge unit 21. Therefore, each time that blow molding is carried out, the tank 122 is capable of repeatedly delaying the valve-opening operation of the first fluid drive valve 30a.

According to the present embodiment, when the control signal is input to the first solenoid valve 110a, the first solenoid valve 110a is driven, whereupon the pilot fluid passes through the tank 122 and then is supplied to the first fluid drive valve 30a. Owing to this feature, compared to a case in which the tank 122 is not provided, the time until the pressure of the pilot fluid that is supplied to the first fluid drive valve 30a reaches the drive pressure of the first fluid drive valve 30a can be delayed. Consequently, with a simple configuration, the start time of the valve-opening operation of the first fluid drive valve 30a can be delayed beyond the start time of the valve-closing operation of the second fluid drive valve 30b.

Further, since the pilot fluid supply port 114a is closed and the pilot fluid output port 116a and the pilot fluid discharge port 118a are placed in communication in the event that the input of the control signal to the first solenoid valve 110a is stopped, the pilot fluid in the interior of the tank 122 can easily and reliably be discharged.

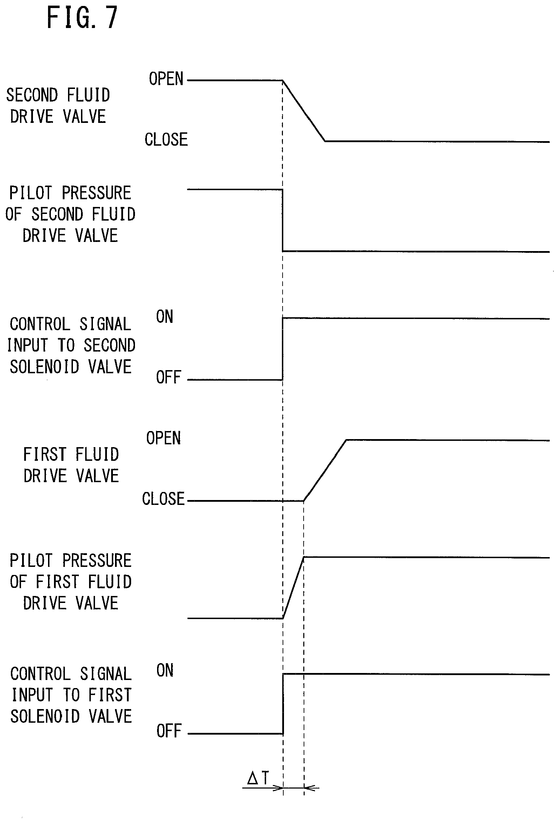

The present embodiment is not limited to the configuration and controls described above. The capacity or volume of the tank 122 may be set to a capacity or volume such that the start of the valve-opening operation of the first fluid drive valve 30a occurs during a time between the start and the completion of the valve-closing operation of the second fluid drive valve 30b. In this case, when the one control signal from the controller 22 is output with respect to the first solenoid valve 110a and the second solenoid valve 110b, as shown in FIG. 7, owing to the tank 122, the valve-opening operation of the first fluid drive valve 30a under the action of the first solenoid valve 110a is started during a time between the start and the completion of the valve-closing operation of the second fluid drive valve 30b under the action of the second solenoid valve 110b (after the valve-closing operation of the second fluid drive valve 30b has started).

Consequently, since the time for which the fluid supply unit 14 and the fluid discharge unit 18 communicate with each other is comparatively short, leaking out of fluid from the fluid supply unit 14 to the fluid discharge unit 18 can be minimized. Accordingly, the control can be simplified, and consumption of fluid can be suppressed. Further, lengthening of the time needed for the flow passage switching operations of the fluid pressure circuit 10B can further be suppressed.

## Claims

1. A fluid pressure circuit (10A, 10B) comprising:
a supply flow passage (56) that guides a fluid from a fluid supply unit (14) to a fluid receiving unit (16) that is supplied with the fluid;
a first fluid drive valve (30a) that opens and closes the supply flow passage (56);
a discharge flow passage (58) that guides fluid from the fluid receiving unit (16) to a fluid discharge unit (18) ;
a second fluid drive valve (30b) that opens and closes the discharge flow passage (58);
a first pilot flow passage (108) that guides a pilot fluid to the first fluid drive valve (30a);
a first solenoid valve (110a) disposed in the first pilot flow passage (108);
a second pilot flow passage (112) that guides the pilot fluid to the second fluid drive valve (30b);
a second solenoid valve (110b) disposed in the second pilot flow passage (112); and
**characterized by** delay means for delaying a start time of a valve-opening operation of the first fluid drive valve (30a) until after a start time of a valve-closing operation of the second fluid drive valve (30b), when one control signal from a controller (22) is output with respect to the first solenoid valve (110a) and the second solenoid valve (110b).

2. The fluid pressure circuit (10A, 10B) according to claim 1, wherein the delay means starts the valve-opening operation of the first fluid drive valve (30a) after completion of the valve-closing operation of the second fluid drive valve (30b).

3. The fluid pressure circuit (10A, 10B) according to claim 1 or 2, wherein the delay means includes a delay circuit (120) disposed in the first solenoid valve (110a).

4. The fluid pressure circuit (10B) according to any one of claims 1 through 3, wherein:
when the control signal is input, the first solenoid valve (110a) is driven to supply the pilot fluid to the first fluid drive valve (30a), and when input of the control signal is stopped, the first solenoid valve (110a) is driven to stop supply of the pilot fluid to the first fluid drive valve (30a);
the valve-opening operation of the first fluid drive valve (30a) is started when the pilot fluid, which is led from the first solenoid valve (110a), has reached a predetermined drive pressure; and
the delay means includes a tank (122) that is disposed between the first solenoid valve (110a) in the first pilot flow passage (108) and the first fluid drive valve (30a).

5. The fluid pressure circuit (10B) according to claim 4, wherein:
the first solenoid valve (110a) includes a pilot fluid supply port (114a) to which the pilot fluid from the pilot fluid supply unit (20) is introduced, a pilot fluid output port (116a) that outputs the pilot fluid to the first fluid drive valve (30a), and a pilot fluid discharge port (118a) through which the pilot fluid is led out to the pilot fluid discharge unit (21); and
when the control signal is input, the pilot fluid discharge port (118a) closes and the pilot fluid supply port (114a) and the pilot fluid output port (116a) are placed in communication, and when the input of the control signal is stopped, the pilot fluid supply port (114a) closes and the pilot fluid output port (116a) and the pilot fluid discharge port (118a) are placed in communication.

6. A blow molding system (12A, 12B) that performs blow molding by supplying a fluid from a fluid supply unit (14) to a fluid receiving unit (16) that is supplied with the fluid, comprising:
the fluid supply unit (14) and the fluid receiving unit (16) ;
a fluid pressure circuit (10A, 10B) that supplies the fluid from the fluid supply unit (14) to the fluid receiving unit (16);
a fluid discharge unit (18) to which fluid guided from the fluid receiving unit (16) and through the fluid pressure circuit (10A, 10B) is discharged; and
a controller (22) that controls the fluid pressure circuit (10A, 10B);
wherein the fluid pressure circuit (10A, 10B) comprises the fluid pressure circuit (10A, 10B) according to any one of claims 1 through 5.

## Patentansprüche

1. Ein Fluiddruckkreislauf (10A, 10B) mit:
einem Zufuhrdurchgang (56), der ein Fluid von einer Fluidzufuhreinheit (14) zu einer Fluidaufnahmeeinheit (16), die mit dem Fluid versorgt wird, führt;
einem ersten Fluidantriebsventil (30a), welches den Zufuhrdurchgang (56) öffnet und schließt;
einem Ablassdurchgang (58), welcher Fluid von der Fluidaufnahmeeinheit (16) zu einer Fluidablasseinheit (18) führt;
einem zweiten Fluidantriebsventil (30b), welches den Ablassdurchgang (58) öffnet und schließt;
einem ersten Steuerdurchgang (108), der ein Steuerfluid zu dem ersten Fluidantriebsventil (30a) führt;
einem ersten Elektromagnetventil (110a), das in dem ersten Steuerdurchgang (108) angeordnet ist;
einem zweiten Steuerdurchgang (112), der das Steuerfluid zu dem zweiten Fluidantriebsventil (30b) führt,
einem zweiten Elektromagnetventil (110b), das in dem zweiten Steuerdurchgang (112) angeordnet ist; und
**gekennzeichnet durch** Verzögerungsmittel zur Verzögerung einer Startzeit eines Ventilöffnungsvorgangs des ersten Fluidantriebsventils (30a) bis nach einer Startzeit eines Ventilschließvorgangs des zweiten Fluidantriebsventils (30b), wenn ein Steuersignal von einer Steuerung (22) zu dem ersten Elektromagnetventil (110a) und dem zweiten Elektromagnetventil (110b) ausgegeben wird.

2. Der Fluiddruckkreislauf (10A, 10B) nach Anspruch 1, wobei die Verzögerungsmittel den Ventilöffnungsvorgang des ersten Fluidantriebsventils (30a) nach Abschluss des Ventilschließvorgangs des zweiten Fluidantriebsventils (30b) beginnen.

3. Der Fluiddruckkreislauf (10A, 10B), nach Anspruch 1 oder 2, wobei die Verzögerungsmittel eine Verzögerungsschaltung (120) umfassen, die in dem ersten Elektromagnetventil (110a) angeordnet ist.

4. Der Fluiddruckkreislauf (10B) nach einem der Ansprüche 1 bis 3, wobei:
dann, wenn das Steuersignal eingegeben wird, das erste Elektromagnetventil (110a) angetrieben wird, um das Steuerfluid dem ersten Fluidantriebsventil (30a) zuzuführen, und dann, wenn die Eingabe des Steuersignals unterbrochen wird, das erste Elektromagnetventil (110a) angetrieben wird, um die Zufuhr des Steuerfluids zu dem ersten Fluidantriebsventil (30a) zu unterbrechen;
der Ventilöffnungsvorgang des ersten Fluidantriebsventils (30a) begonnen wird, wenn das Steuerfluid, das von dem ersten Elektromagnetventil (110a) zugeführt wird, einen festgelegten Antriebsdruck erreicht hat; und
die Verzögerungsmittel einen Tank (122) aufweisen, der zwischen dem ersten Elektromagnetventil (110a) in dem ersten Steuerdurchgang (108) und dem ersten Fluidantriebsventil (30a) angeordnet ist.

5. Der Fuiddruckkreislauf (10B) nach Anspruch 4, wobei:
das erste Elektromagnetventil (110a) einen Steuerfluidzufuhranschluss (114a) aufweist, dem das Steuerfluid von der Steuerfluidzufuhreinheit (20) zugeführt wird, einen Steuerfluidausgangsanschluss (116a), der das Steuerfluid zu dem ersten Fluidantriebsventil (30a) ausgibt, und einen Steuerfluidablassanschluss (118a), durch welchen das Steuerfluid zu der Steuerfluidablasseinheit (21) abgeführt wird; und
dann, wenn das Steuersignal eingegeben wird, der Steuerfluidablassanschluss (118a) schließt und der Steuerfluidzufuhranschluss (114a) und der Steuerfluidausgangsanschluss (116a) in Verbindung miteinander gebracht werden und dann, wenn die Zufuhr des Steuersignals unterbrochen wird, der Steuerfluidzufuhranschluss (114a) schließt und der Steuerfluidausgangsanschluss (116a) und der Steuerfluidablassanschluss (118a) in Verbindung miteinander gebracht werden.

6. Ein Blasformsystem (12A, 12B), das ein Blasformen durch Zufuhr eines Fluids von einer Fluidzufuhreinheit (14) zu einer Fluidaufnahmeeinheit (16), welche mit dem Fluid versorgt wird, durchführt, mit:
der Fluidzufuhreinheit (14) und der Fluidaufnahmeeinheit (16);
einem Fluiddruckkreislauf (10A, 10B), welcher das Fluid von der Fluidzufuhreinheit (14) der Fluidaufnahmeeinheit (16) zuführt;
einer Fluidablasseinheit (18), durch welche das von der Fluidaufnahmeeinheit (16) und durch den Fluiddruckkreislauf (10A, 10B) geführte Fluid abgelassen wird; und
einer Steuerung (22), welche den Fluiddurckkreislauf (10A, 10B) steuert;
wobei der Fluiddruckkreislauf (10A, 10B) den Fluiddruckkreislauf (10A, 10B) nach einem der Ansprüche 1 bis 5 umfasst.

## Revendications

1. Circuit de pression de fluide (10A ,10B) comprenant :
un passage d'écoulement d'alimentation (56) qui guide un fluide à partir d'une unité d'alimentation de fluide (14) vers une unité de réception de fluide (16) qui est fournie avec le fluide ;
une première vanne d'entraînement de fluide (30a) qui ouvre et ferme le passage d'écoulement d'alimentation (56) ;
un passage d'écoulement de décharge (58) qui guide le fluide à partir de l'unité de réception de fluide (16) vers une unité de décharge de fluide (18) ;
une seconde vanne d'entraînement de fluide (30b) qui ouvre et ferme le passage d'écoulement de décharge (58) ;
un premier passage d'écoulement pilote (108) qui guide un fluide pilote vers la première vanne d'entraînement de fluide (30a) ;
une première vanne électromagnétique (110a) disposée dans le premier passage d'écoulement pilote (108) ;
un second passage écoulement pilote (112) qui guide le fluide pilote vers la seconde vanne d'entraînement de fluide (30b) ;
une seconde vanne électromagnétique (110b) disposée dans le second passage d'écoulement pilote (112) ; et
**caractérisé en ce que**
le moyen de retard destiné au retardement d'un temps de départ d'une opération d'ouverture de vanne de la première vanne d'entraînement de fluide (30a) jusqu'après un temps de départ d'une opération d'ouverture de vanne de la seconde vanne d'entraînement de fluide (30b), lorsqu'un signal de commande à partir d'un contrôleur (22) est en sortie par rapport à la première vanne électromagnétique (110a) et à la seconde vanne électromagnétique (110b).

2. Circuit de pression de fluide (10A ,10B) selon la revendication 1, dans lequel le moyen de retard initie l'opération d'ouverture de vanne de la première vanne d'entraînement de fluide (30a) après la fin de l'opération d'ouverture de vanne de la seconde vanne d'entraînement de fluide (30b).

3. Circuit de pression de fluide (10A, 10B) selon la revendication 1 ou 2, dans lequel le moyen de retard inclut un circuit de retard (120) disposé dans la première vanne électromagnétique (110a).

4. Circuit de pression de fluide (10B) selon l'une quelconque des revendications 1 à 3, dans lequel :
lorsque le signal de commande est en entrée, la première vanne électromagnétique (110a) est actionnée pour livrer le fluide pilote à la première vanne entraînement de fluide (30a), et lorsque l'entrée du signal de commande est stoppée, la première vanne électromagnétique (110a) est actionnée pour stopper la livraison du fluide pilote à la première vanne d'entraînement de fluide (30a) ;
l'opération d'ouverture de vanne de la première vanne d'entraînement de fluide (30a) débute lorsque le fluide pilote, qui est mené à partir de la première vanne électromagnétique (110a), a atteint une pression d'action prédéterminée ; et
le moyen de retard inclut un réservoir (122) qui est disposé entre la première vanne électromagnétique (110a) dans le premier passage d'écoulement pilote (108) et la première vanne d'entraînement de fluide (30a).

5. Circuit de pression de fluide (10B) selon la revendication 4, dans lequel :
la première vanne électromagnétique (110a) inclut un port d'alimentation de fluide pilote (114a) dans quel le fluide pilote à partir de l'unité d'alimentation de fluide pilote (20) est introduit, un port de sortie de fluide pilote (116a) qui produit le fluide pilote vers la première vanne à entraînement de fluide (30a), et un port de décharge de fluide pilote (118a) à travers lequel le fluide pilote est mené vers l'unité de décharge de fluide pilote (21) ; et
lorsque le signal de commande est en entrée, le port de décharge de fluide pilote (118a) se ferme et le port d'alimentation de fluide pilote (114a) et le port de sortie de fluide pilote (116a) sont mis en communication, et lorsque l'entrée du signal de commande est stoppée, le port d'alimentation de fluide pilote (114a) se ferme et le port de sortie de fluide pilote (116a) et le port de décharge de fluide pilote (118a) sont mis en communication.

6. Système de moulage par soufflage (12A, 12B) qui effectue un moulage par soufflage en délivrant un fluide à partir d'une unité d'alimentation de fluide (14) vers une unité de réception de fluide (16) qui est délivrée avec le fluide, comprenant :
l'unité d'alimentation de fluide (14) et l'unité de réception de fluide (16) ;
un circuit de pression de fluide (10A, 10B) qui fournit le fluide à partir de l'unité d'alimentation de fluide (14) vers l'unité de réception de fluide (16) ;
une unité de décharge de fluide (18) vers laquelle le fluide guidé depuis l'unité de réception de fluide (16) et à travers le circuit de pression de fluide (10A, 10B) est déchargé ; et
un contrôleur (22) qui commande le circuit de pression de fluide (10A, 10B) ;
dans lequel le circuit de pression de fluide (10A, 10B) comprend le circuit de pression de fluide (10A, 10B) selon l'une quelconque des revendications 1 à 5.
